# EUROPEAN PATENT APPLICATION

(11) **EP 2 335 864 A1**
(43) Date of publication of application: **22.06.2011**
(21) Application number: 09809945.0
(22) Date of filing: 26.08.2009
(51) Int. Cl.: B23K 37/00, B23K 37/04, B23K 26/20

(54) **WELDING DEVICE**

(30) Priority: 28.08.2008 JP 2008219712
(71) Applicant: IHI Corporation, Tokyo 135-8710 (JP)
(72) Inventor: MAENO, Jun, Tokyo 135-8710 (JP); NISHIMI, Akihiro, Tokyo 135-8710 (JP)
(74) Representative: Epping - Hermann - Fischer
(86) International application number: PCT/JP2009/064864
(87) International publication number: WO 2010/024294

(57) **Abstract**

Welding equipment for performing butt welding on a plurality of blank components B butted against each other includes positioning stations 4 and 6 for positioning the individual blank components, a welding station 2 having a welding head for welding the blank components together, and first and second tables 10 and 12 movable between the welding station 2 and the respective positioning stations 4 and 6. When the first table 10 is moved to the positioning station 4, the second table 12 is moved to the welding station 2, and when the first table 10 is moved to the welding station 2, the second table 12 is moved to the positioning station 6, so that the multiple blank components may be welded together by the welding head to obtain a finished article.

## Description

### Technical Field

The present invention relates to welding equipment for welding a plurality of blank components together.

### Background Art

When welding a plurality of plate-like blank components together, the blank components are first positioned using a jig such that one end of a blank component is butted against a mating end of another blank component. Then, the butted junction is joined by laser welding.

Where welding equipment for carrying out such butt welding is used, the laser welding itself can be completed in a relatively short period of time. Loading and positioning of the blank components, on the other hand, require time. Thus, if processes including the loading and positioning of the blank components, the laser welding, and the unloading of the blank components are performed in the same place, the overall operation time is prolonged by the most time-consuming process.

In the welding apparatus disclosed in Patent Document 1 identified below, a plurality of welding stations are arranged in parallel with a transfer line, and while welding operation is carried out at one welding station, a jig pallet is loaded and positioned at another welding station. When the welding operation at the one welding station is completed, welding operation is started at the other welding station. With this welding apparatus, the overall operation time can be shortened.

### Prior Art Documents

### Patent Document

Patent Document 1: Japanese Laid-open Patent Publication No. 08-290282

### Summary of the Invention

### Problems to be Solved by the Invention

In the welding apparatus disclosed in Patent Document 1, however, two welding stations with the same function need to be provided even in the case where the welding operation is performed on identical parts of blank components of the same specification, with the result that the welding apparatus requires considerable space. Also, each of the two welding stations needs to be equipped with a welding head capable of covering the two welding stations, which entails increase in cost.

The present invention was made in view of the above circumstances, and an object thereof is to provide welding equipment which makes it possible to reduce the number of required welding stations and which also can advantageously save space as well as cost.

### Means for Solving the Problems

The present invention was created to achieve the above object. Welding equipment according to claim 1, which performs butt welding on a plurality of blank components butted against each other, comprises: a positioning station for positioning the blank components; a welding station having a welding head for welding the blank components to each other; first and second tables each movable between the positioning station and the welding station; and a fixing device associated with each of the first and second tables, for fixing the blank components in respective predetermined positions on a corresponding one of the first and second tables, wherein, when the first table is moved to the positioning station, the second table is moved to the welding station, and when the first table is moved to the welding station, the second table is moved to the positioning station, and wherein the blank components are fixed on the first or second table located at the positioning station, then moved together with the first or second table to the welding station, and welded together by the welding head, thus obtaining a finished article.

According to claim 2, the welding equipment of claim 1 further comprises: a loading station on which are placed the blank components not welded yet; an unloading station on which the finished article is placed; a first transfer device for transferring the blank components placed on the loading station onto the first or second table located at the positioning station; and a second transfer device for transferring the finished article on the first or second table which has been moved to the positioning station after completion of welding at the welding station, to the unloading station.

According to claim 3, the positioning station of the welding equipment of claim 1 includes a first positioning stage arranged on one side of the welding station, and a second positioning stage arranged on another side of the welding station opposite the first positioning stage, wherein, when the first table is moved to the first positioning stage, the second table is moved to the welding station, and when the first table is moved to the welding station, the second table is moved to the second positioning stage.

According to claim 4, the positioning station of the welding equipment of claim 1 is arranged on one side of the welding station, and the first and second tables are moved along respective movement paths different in height from each other.

According to claim 5, the first and second tables of the welding equipment of claim 1 are each provided with a positioning device for positioning the individual blank components.

According to claim 6, the positioning device of the welding equipment of claim 5 includes stoppers located in respective predetermined positions on a corresponding one of the first and second tables and capable of projecting from the corresponding table, and push members for pushing the respective blank components so as to come into close contact with corresponding ones of the stoppers.

According to claim 7, the blank components used in the welding equipment of claim 5 include at least first and second blank components, wherein the first blank component is positioned in a predetermined position by the positioning device, then the first blank component is fixed on one of the first and second tables by the fixing device, and with the second blank component pushed so as to be butted against the first blank component, the second blank component is fixed on the other of the first and second tables by the fixing device.

According to claim 8, the aforementioned one of the first and second tables of the welding equipment of claim 7 further includes a pair of guide members, and when the first blank component is fixed on the one of the first and second tables by the fixing device, the guide members are located on both sides of the first blank component near a side of the first blank component against which the second blank component is to be butted, to prevent the second blank component from running onto the first blank component.

According to claim 9, the fixing device of the welding equipment of claim 1 includes attraction units for attracting respective lower surfaces of the blank components.

According to claim 10, the attraction units of the welding equipment of claim 9 are each a magnetic attraction unit attached to a corresponding one of the first and second tables.

### Advantageous Effects of the Invention

The welding equipment according to claim 1 includes the first and second tables on which the blank components are fixed, and the first and second tables are individually moved between the positioning station and the welding station. While welding operation is performed on the blank components fixed on one of the tables located at the welding station, blank components are positioned and fixed on the other table located at the positioning station. Since the welding and positioning of the blank components can be carried out at the same time, overall operation time can be shortened. Also, only one welding station suffices insofar as the same welding operation is performed on the same type of blank components, and accordingly, space can be significantly saved, compared with the aforementioned conventional apparatus.

In the welding equipment according to claim 2, when one of the first and second tables is located at the welding station, welding operation is performed on the blank components on the table located at the welding station. While the welding operation is thus performed, the other of the first and second tables is located at the positioning station, the second transfer device transfers the finished article on the other table located at the positioning station to the unloading station, and the first transfer device transfers blank components from the loading station onto the other table located at the positioning station. It is therefore possible to shorten the overall operation time including the loading of blank components and the unloading of finished articles.

In the welding equipment according to claim 3, when the first table is moved to the first positioning stage, the second table is moved to the welding station. On the other hand, when the first table is moved to the welding station, the second table is moved to the second positioning stage. In addition, the first and second positioning stages are located on opposite sides of the welding station, respectively. Accordingly, the two positioning stations can be arranged in a plane, namely, on a level with each other, making it possible to reduce the height of the welding equipment.

In the welding equipment according to claim 4, the positioning station is arranged on only one side of the welding station, and the first and second tables are moved at respective different levels, or heights, between the positioning station and the welding station. This arrangement serves to make the horizontal size of the welding equipment as a whole compact.

In the welding equipment according to claim 5, the blank components are positioned in the respective predetermined positions on a corresponding one of the first and second tables by the positioning device associated with the table.

In the welding equipment according to claim 6, the stoppers located at the respective predetermined positions on each of the first and second tables are caused to project from the table, and the blank components are pushed by the push members so as to come into close contact with the corresponding stoppers, thereby positioning the blank components.

In the welding equipment according to claim 7, the first blank component is positioned by the positioning device and then fixed on the table by the fixing device. Subsequently, with the second blank component pushed so as to be butted against the first blank component, the second blank component is fixed on the table by the fixing device. In this manner, the two blank components are positioned and fixed on the table. Accordingly, the second blank component can be positioned with high accuracy with respect to the first blank component.

In the welding equipment according to claim 8, when the second blank component is butted against the first blank component which has been fixed on the table by the fixing device, the guide members associated with the table reliably prevent the second blank component from running onto the first blank component.

In the welding equipment according to claim 9, the fixing device comprises attraction units for attracting the lower surfaces of the respective blank components. Since clamps or like members do not project above the upper surfaces of the blank components, no restriction is imposed on the movement of the welding head which performs laser welding, thus enabling high-speed movement of the welding head.

In the welding equipment according to claim 10, each attraction unit is a magnetic attraction unit attached to the corresponding table. Accordingly, an attraction mode in which the attraction unit attracts the lower surface of the corresponding blank component and a non-attraction mode can be easily switched from one to the other.

### Brief Description of the Drawings

FIG. 1 is a plan view of welding equipment according to a first embodiment.
FIG. 2 is an enlarged view showing a welding station and a positioning station in FIG. 1.
FIG. 3 is a right side view of the stations shown in FIG. 2.
FIG. 4 is a plan view illustrating an initial positioning process of a positioning device provided on a table of the welding equipment.
FIG. 5 is a plan view similar to FIG. 4, illustrating a subsequent positioning process of the positioning device.
FIG. 6 is an enlarged view of part VI shown in FIG. 5.
FIG. 7 is a sectional view taken along line VII-VII in FIG. 6.
FIG. 8 is a sectional view taken along line VIII-VIII in FIG. 7.
FIG. 9 is a plan view of welding equipment according to a second embodiment.
FIG. 10 is an enlarged view showing a welding station and a positioning station in FIG. 9.
FIG. 11 is a right side view of the stations shown in FIG. 10.
FIG. 12 is a block diagram illustrating movement control for each of first and second tables.

### Mode of Carrying out the Invention

The best mode of carrying out the present invention will be hereinafter described with reference to the accompanying drawings.

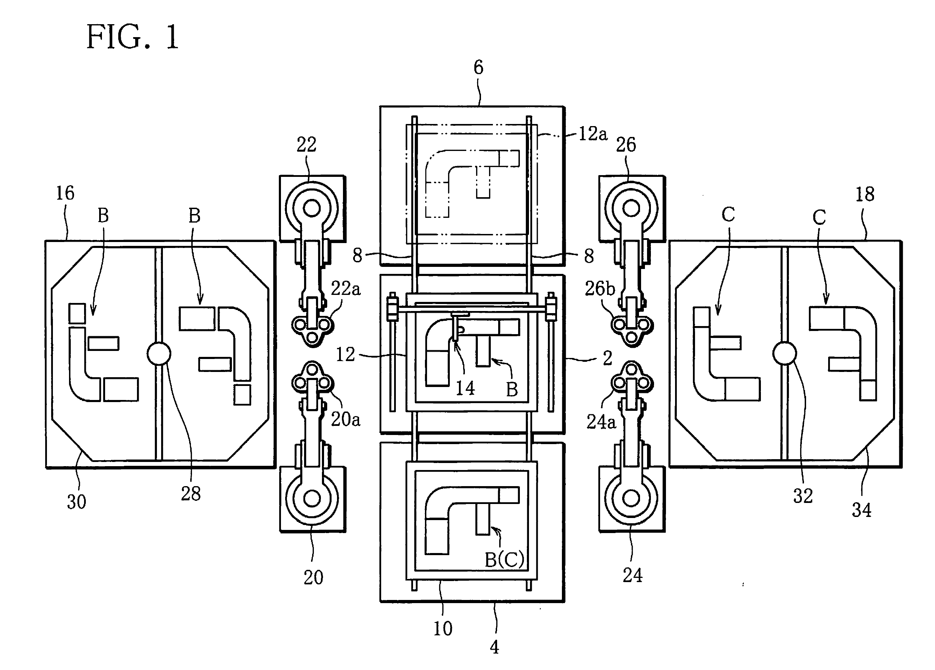

As illustrated in FIG. 1, welding equipment according to a first embodiment comprises a welding station 2, a first positioning stage 4 arranged on one side of the welding station 2, and a second positioning stage 6 arranged on the other side of the welding station 2 opposite the first positioning stage 4. The first and second positioning stages 4 and 6 constitute a positioning station. A pair of rails 8 is laid on the welding station 2 and the positioning station (first and second positioning stages 4 and 6). First and second tables 10 and 12 are movably placed on the rails 8. Specifically, the first table 10 is movable along the rails 8 between the first positioning stage 4 and the welding station 2. The second table 12 is movable along the rails 8 between the welding station 2 and the second positioning stage 6. The welding station 2 is equipped with a welding device 14 for welding a set of blank components B together. Each of the first and second tables 10 and 12 has the function of positioning and fixing the blank components B thereon. The positioning function and the fixing function will be explained later.

A loading station 16 for storing the blank components B to be loaded is arranged on another side of the welding station 2, and an unloading station 18 for storing finished articles C, which are the blank components B welded together, is arranged on the other side of the welding station 2 opposite the loading station 16. Robots 20 and 22 as a first transfer device are placed between the loading station 16 and the respective positioning stages 4 and 6 for transferring the blank components B on the loading station 16 to the respective positioning stages 4 and 6. Also, robots 24 and 26 as a second transfer device are placed between the unloading station 18 and the respective positioning stages 4 and 6 for transferring the finished article C, that is, the welded blank components B, on the respective positioning stages 4 and 6 to the unloading station 18. The robots 20, 22, 24 and 26 have attractors 20a, 22a, 24a and 26a at their respective distal ends for attracting the blank components B.

The loading station 16 is provided with a turntable 30 rotatable about an axis 28 and having an upper surface divided into two parts. Likewise, the unloading station 18 is provided with a turntable 34 rotatable about an axis 32 and having an upper surface divided into two parts.

The operations of the first and second tables 10 and 12, the operations of the robots 20, 22, 24 and 26, and the operations of the turntables 30 and 34 will be now explained in relation to one another.

A set of blank components B is placed in a predetermined position on the left half of the turntable 30, as viewed in FIG. 1. On the turntable 30, a predetermined number of sets of blank components B are stacked one upon another. With the blank components B thus placed, the turntable 30 is rotated by 180° about the axis 28. Thus, the blank components B are moved to the right half of the turntable 30, as viewed in FIG. 1, so that the left half of the turntable 30 is empty. The predetermined number of sets of blank components B stacked one upon another are placed in a short time on the left half of the turntable 30. The blank components B placed on the right half of the turntable 30 are then successively transferred to the positioning station. When the right half of the turntable 30 is emptied, the turntable 30 is again rotated. Consequently, the right half of the turntable 30 always has the blank components B placed thereon.

Let it be assumed here that the first and second tables 10 and 12 are located at the first positioning stage 4 and the welding station 2, respectively, each with no blank components placed thereon. First, the robot 20 attracts, to its attractor 20a, the individual blank components B placed on the right half of the turntable 30 and successively places the blank components B on the first table 10. After one set of blank components B is positioned and fixed in a predetermined position on the first table 10, the first table 10 is moved to the welding station 2. At this time, the second table 12 is moved to the second positioning stage 6, as indicated by dot-dot-dash lines 12a in FIG. 1.

Subsequently, at the welding station 2, the blank components B on the first table 10 are welded together by the welding device 14. While the welding operation is carried out, the robot 22 attracts, to its attractor 22a, the individual blank components B placed on the right half of the turntable 30 and successively places the blank components B on the second table 12 then located at the second positioning stage 6.

When the welding operation at the welding station 2 is completed and also the placement of one set of blank components B at the second positioning stage 6 is completed, the first table 10 carrying the finished article C thereon is again moved to the first positioning stage 4. Simultaneously with this, the second table 12 having the blank components B placed thereon is moved to the welding station 2.

At the first positioning stage 4, the robot 24 attracts, to its attractor 24a, the finished article C on the first table 10 and transfers the attracted finished article C onto the left half of the turntable 34, as viewed in FIG. 1. A predetermined number of finished articles C are stacked one upon another on the left half of the turntable 34. The turntable 34 is then rotated by 180° about the axis 32. Consequently, the finished articles C are moved to the right half of the turntable 34 and then are removed by a worker or another robot. Further, the robot 20 attracts to its attractor 20a the individual blank components B on the right half of the turntable 30 and successively transfers the blank components B onto the first table 10. At the first table 10, the blank components B are positioned and fixed in the respective predetermined positions.

On the other hand, at the welding station 2, the blank components B on the second table 12 are welded together by the welding device 14.

When the positioning and fixing operation at the first positioning stage 4 and the welding operation at the welding station 2 are completed, the first table 10 is moved to the welding station 2 while the second table 12 is moved to the second positioning stage 6.

At the second positioning stage 6, the robot 26 attracts, to its attractor 26a, the finished article C on the second table 12 and transfers the attracted finished article C onto the left half of the turntable 34. Further, the robot 22 attracts to its attractor 22a the individual blank components B on the right half of the turntable 30 and successively transfers the blank components B onto the second table 12. At the second table 12, the blank components B are positioned and fixed in the respective predetermined positions.

At the welding station 2, on the other hand, the blank components B on the first table 10 are welded together by the welding device 14.

The first and second tables 10 and 12, the robots 20, 22, 24 and 26 and the turntables 30 and 34 repeatedly perform the aforementioned sequence of operations.

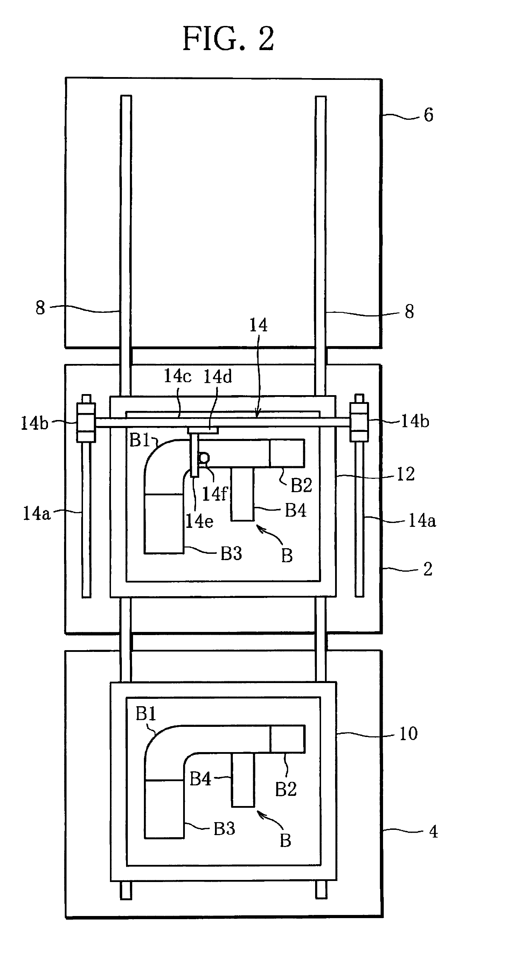

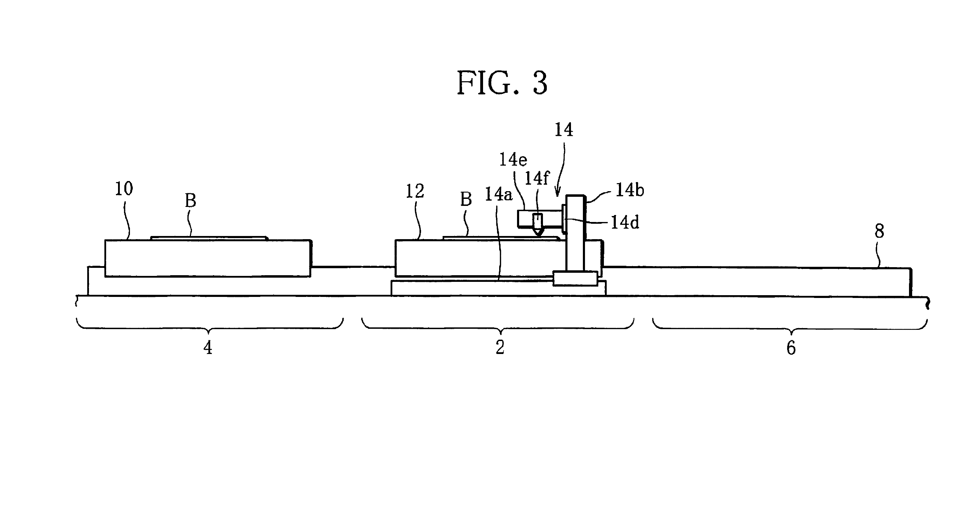

The welding device 14 provided at the welding station 2 will be now described with reference to FIGS. 2 and 3.

The welding device 14 includes two rails 14a laid on the upper surface of the welding station 2 near the opposite side edges, respectively, and extending parallel with the rails 8, two posts 14b guided by the respective rails 14a, a rail 14c connecting between the two posts 14b and extending perpendicularly to the rails 14a, a slider 14d guided by the rail 14c, and a welding head 14f supported on the slider 14d by a supporting member 14e. The positioning of the posts 14b relative to the rails 14a and the positioning of the slider 14d relative to the rail 14c are controlled by a controller, not shown, in accordance with the welding position.

Specifically, one set of blank components B is constituted, for example, by four blank components B1, B2, B3 and B4, and butt welding is performed on each of butted junctions of the four blank components. The controller enables the welding head 14f to move along each butted junction that needs to be welded.

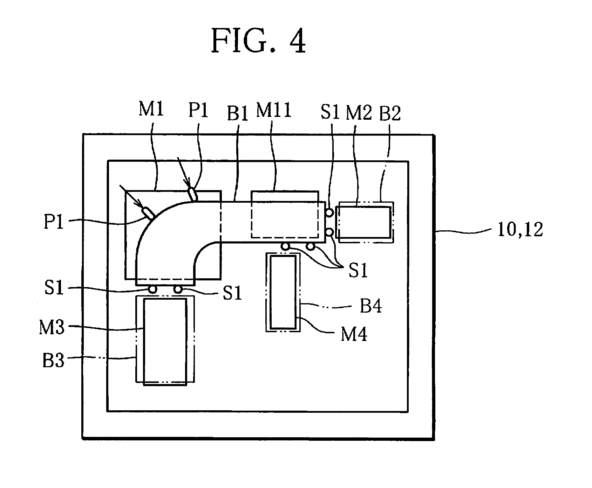

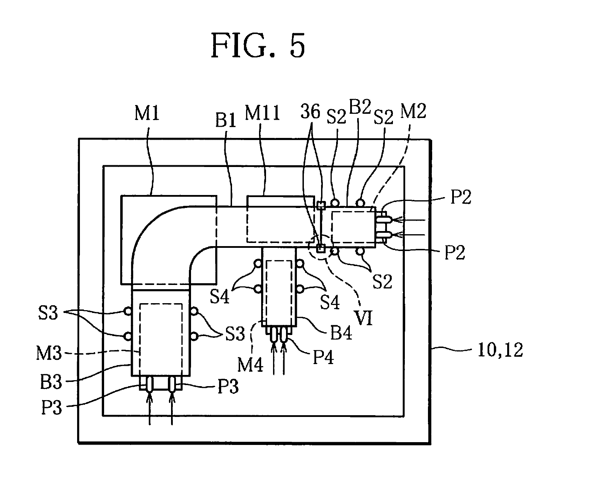

Devices for positioning and fixing the blank components B, which devices are provided for each of the tables 10 and 12, will be now described with reference to FIGS. 4 and 5.

The tables 10 and 12 are each provided, as the positioning device, with stopper pins located in respective predetermined positions and capable of projecting from the table so as to come into contact with the blank components B, and push members for pushing the blank components in predetermined directions. Also, each of the tables 10 and 12 is provided, as the fixing device, with magnet clamps (attraction units) M1, M11, M2, M3 and M4 attached to the table so as to correspond in position to the respective blank components B for attracting the lower surfaces of the blank components B. Each magnet clamp is of a magnetic type, and therefore, an attraction mode in which the magnet clamp attracts the lower surface of the corresponding blank component B and a non-attraction mode can be easily switched from one to the other.

In this welding equipment, first, the blank component B1 is positioned and fixed on the table 10, 12, and then the blank components B2, B3 and B4 are positioned and fixed on the table 10, 12.

To position the blank component B1, six stopper pins S1 are caused to project from the respective predetermined positions on the table 10, 12, as illustrated in FIG. 4. Subsequently, the blank component B1 is pushed by two push members P1 in directions indicated by the arrows in FIG. 4 so that the blank component B1 may come into close contact with the stopper pins S1, whereupon the positioning of the blank component B1 is completed. With the blank component B1 held in this manner, the magnet clamps M1 and M11 are caused to attract the blank component B1, whereby the blank component B1 is fixed in the predetermined position on the table 10, 12. The stopper pins S1 and the push members P1 are thereafter lowered beneath the table 10, 12 so as not to project from the table 10, 12.

Subsequently, as illustrated in FIG. 5, four stopper pins S2, four stopper pins S3 and four stopper pins S4 are made to project from the table 10, 12 in order to position the respective blank components B2, B3 and B4. Then, the blank components B2, B3 and B4 are pushed by respective three pairs of push members P2, P3 and P4 in directions indicated by the arrows in FIG. 5 so that the blank components B2, B3 and B4 may come into close contact with the blank component B1 already fixed on the table 10, 12, whereupon the positioning of the blank components B2, B3 and B4 is completed. With the blank components B2, B3 and B4 held in this manner, the magnet clamps M2, M3 and M4 are caused to attract the respective blank components B2, B3 and B4. Thus, the blank components B2, B3 and B4 are fixed in the respective predetermined positions on the table 10, 12. Subsequently, the stopper pins S2, S3 and S4 and the push members P2, P3 and P4 are lowered beneath the table 10, 12 so as not to project from the table 10, 12.

A slight gap is provided between each of the stopper pins S2, S3 and S4 and a corresponding one of the blank components B2, B3 and B4, and when the blank components B2, B3 and B4 are pushed by the respective push members P2, P3 and P4, the stopper pins S2, S3 and S4 function as guides for preventing the blank components B2, B3 and B4 from becoming displaced.

The positioning device includes a preventive device whereby, when the blank components B2, B3 and B4 are pushed so as to come into close contact with the blank component B1, either one of the blank components is prevented from running onto the other blank component. In the following, the preventive device associated with the blank components B1 and B2 will be explained.

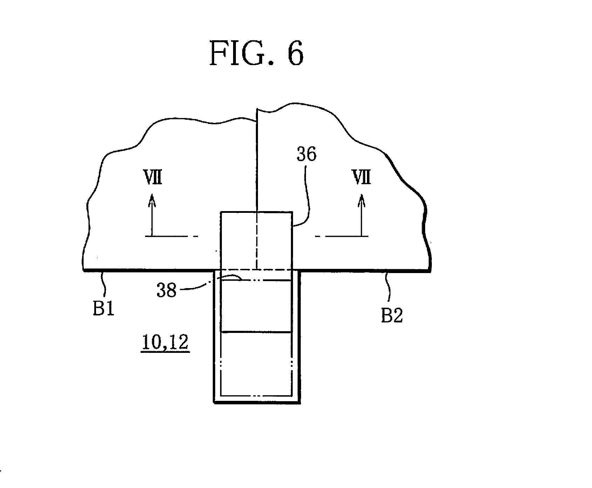

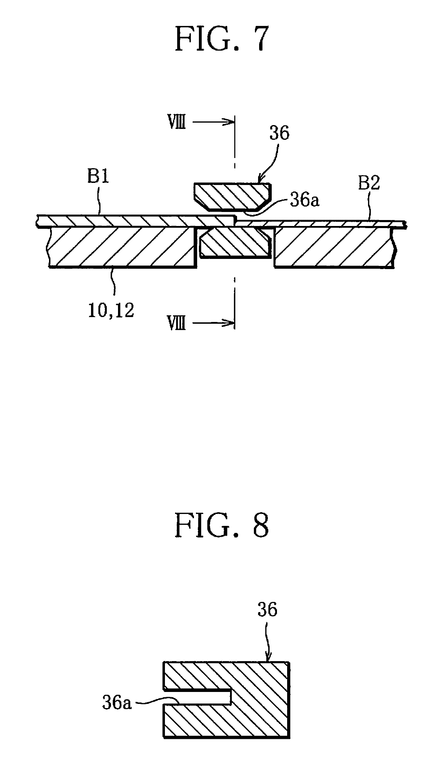

As illustrated in FIG. 5, guide members 36 are arranged on both sides of the butted junction between the blank components B1 and B2 placed on the table 10, 12. Each guide member 36 has a groove 36a as seen from FIGS. 6 to 8. When in use, each guide member 36 is positioned such that a corresponding side portion of the butted junction between the blank components B1 and B2 is received in the groove 36a. The height of the groove 36a is set to such a value that the blank component B2, for example, is prevented from running onto the blank component B1 when pushed against the blank component B1. Specifically, the height of the groove 36a is set to a value smaller than the sum of the thicknesses of the blank components B1 and B2. Also, when not in use, the guide member 36 is withdrawn sideways to a position where the guide member 36 does not overlap with the blank components B1 and B2, as indicated by dot-dot-dash lines 38 in FIG. 6, and is also lowered beneath the table 10, 12 so as not project from the table 10, 12.

As is clear from the foregoing, in the welding equipment of this embodiment, the first and second tables 10 and 12, on which the blank components B are fixed, are alternately moved to the welding station 2 and then back to the respective first and second positioning stages 4 and 6. At the welding station 2, the blank components B fixed on one of the tables 10 and 12 then located at the welding station 2 are welded together. Simultaneously with this, blank components B are positioned and fixed on the other of the tables 10 and 12 then located at the positioning stage 4 or 6. Thus, since the welding and positioning of the blank components B can be carried out at the same time, the overall operation time can be shortened. Moreover, the single welding station 2 suffices insofar as the same welding operation is performed on the same type of blank components B. Accordingly, the welding equipment of this embodiment is advantageous in that the space required can be significantly saved, compared with the aforementioned conventional apparatus. Furthermore, the first and second positioning stages 4 and 6 are arranged on opposite sides of the welding station 2, thus enabling planar arrangement of the two stages 4 and 6 and the welding station 2 and making it possible to reduce the height of the welding equipment.

Also, in the welding equipment of this embodiment, when one of the first and second tables 10 and 12 is located at the welding station 2, the blank components B on the table located at the welding station 2 are welded together. While the welding operation is in progress, the other of the first and second tables 10 and 12 is located at the positioning stage 4 or 6. The robot 24 or 26 transfers the finished article C on the table 10 or 12 located at the positioning stage 4 or 6 onto the turntable 34 of the unloading station 18, and the robot 20 or 22 transfers the individual blank components B placed on the turntable 30 of the loading station 16 onto the table 10 or 12 located at the positioning stage 4 or 6. It is therefore possible to shorten the overall operation time including the time required to load the blank components B as well as the time required to unload the finished articles C.

In the welding equipment of this embodiment, the blank components B are positioned and fixed on the table 10, 12 in the manner stated below. First, the first blank component B1 is positioned by using the stopper pins S1 and the push members P1, and then is fixed in the predetermined position on the table 10, 12 by using the magnet clamps M1 and M11. Subsequently, the second to fourth blank components B2 to B4 are pushed by the push members P2 to P4 so as to be butted against the first blank component B1. With the blank components B2 to B4 held in this state, the blank components B2 to B4 are fixed in position on the table 10, 12 by the respective magnet clamps M2 to M4. Consequently, the second to fourth blank components B2 to B4 can be accurately positioned with respect to the first blank component B1.

Further, the blank components B1 to B4 have their lower surfaces attracted to the magnet clamps M1, M11 and M2 to M4. Since the blank components B1 to B4 are fixed on the table 10, 12 in this manner, clamps or like members do not project above the upper surfaces of the blank components B1 to B4. Thus, at the welding station 2, no restriction is imposed on the movement in a horizontal plane of the welding head 14f of the welding device 14 which performs laser welding, enabling high-speed movement of the welding head 14f.

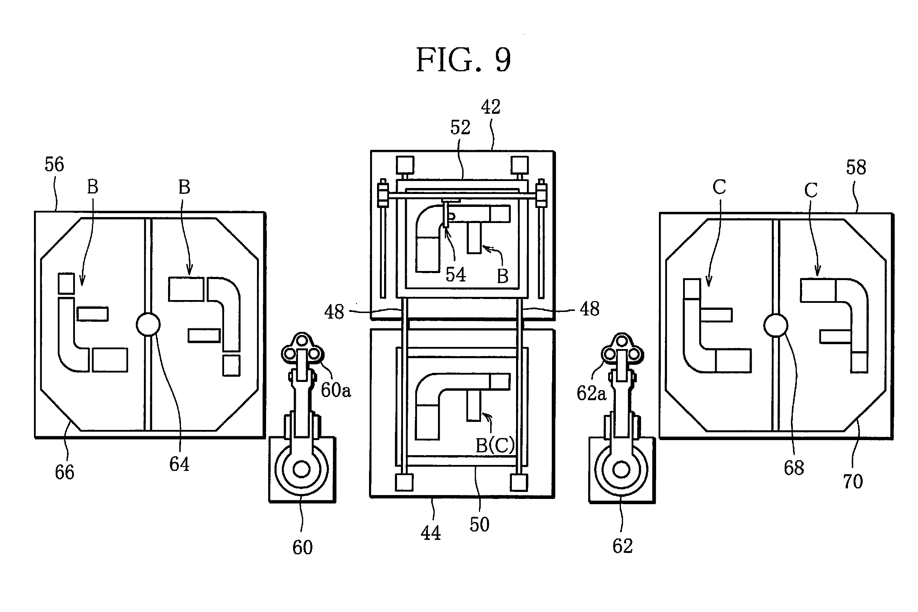

A second embodiment of the present invention will be now described with reference to FIGS. 9 to 11.

Welding equipment according to the second embodiment comprises a welding station 42 and a positioning station 44 arranged on one side of the welding station 42. A first table 50 is slidable along a pair of lower rails 46, and a second table 52 is slidable along a pair of upper rails 48. Specifically, the first table 50 is movable along the lower rails 46 between the positioning station 44 and the welding station 42, and the second table 52 is movable along the upper rails 48 between the positioning station 44 and the welding station 42. The welding station 42 is equipped with a welding device 54 for welding blank components B. The first and second tables 50 and 52 each have the function of positioning and fixing the blank components B thereon.

A loading station 56 for storing blank components B to be loaded is arranged on another side of the welding station 42. An unloading station 58 for storing finished articles C, namely, the blank components B welded together, is arranged on the other side (opposite side) of the welding station 42. A robot 60 as a first transfer device is arranged between the loading station 56 and the positioning station 44, for transferring the blank components B on the loading station 56 to the positioning station 44. Also, a robot 62 is arranged between the unloading station 58 and the positioning station 44. The robot 62 acts as a second transfer device for transferring the welded blank components B on the positioning station 44, namely, the finished article C, to the unloading station 58. The robots 60 and 62 have attractors 60a and 62a at their respective distal ends for attracting the blank components B.

The loading station 56 is provided with a turntable 66 rotatable about an axis 64 and having an upper surface divided into two parts. Similarly, the unloading station 58 is provided with a turntable 70 rotatable about an axis 68 and having an upper surface divided into two parts.

The operations of the first and second tables 50 and 52, the operations of the robots 60 and 62, and the operations of the turntables 66 and 70 will be now explained in relation to one another.

A set of blank components B is placed in a predetermined position on the left half of the turntable 66, as viewed in FIG. 9. On the turntable 66, a predetermined number of sets of blank components B are stacked one upon another. With the blank components B thus placed, the turntable 66 is rotated by 180° about the axis 64. Thus, the blank components B are moved to the right half of the turntable 66, as viewed in FIG. 9. Since the left half of the turntable 66 is empty, the predetermined number of sets of blank components B stacked one upon another are placed in a short time on the left half of the turntable 66. When the right half of the turntable 66 is thereafter emptied, the turntable 66 is again rotated. Consequently, the right half of the turntable 66 always has the blank components B placed thereon.

Let it be assumed here that the first and second tables 50 and 52 are located at the positioning station 44 and the welding station 42, respectively, each with no blank components placed thereon. First, the robot 60 attracts, to its attractor 60a, the individual blank components B placed on the right half of the turntable 66 and successively places the blank components B on the first table 50. After one set of blank components B is positioned and fixed in a predetermined position on the first table 50, the first table 50 is moved along the lower rails 46 to the welding station 42. At this time, the second table 52 is moved along the upper rails 48 to the positioning station 44.

Subsequently, at the welding station 42, the blank components B on the first table 50 are welded together by the welding device 54. While the welding operation is thus performed, the robot 60 attracts to its attractor 60a the individual blank components B placed on the right half of the turntable 66 and successively places the blank components B on the second table 52 then located at the positioning station 44.

When the welding operation at the welding station 42 is completed and also the placement of one set of blank components B at the positioning station 44 is completed, the first table 50 carrying the finished article C thereon is again moved along the lower rails 46 to the positioning station 44. Simultaneously with this, the second table 52 having the blank components B placed thereon is moved along the upper rails 48 to the welding station 42.

At the positioning station 44, the robot 62 attracts to its attractor 62a the finished article C on the first table 50 and transfers the attracted finished article C onto the left half of the turntable 70, as viewed in FIG. 9. After a predetermined number of finished articles C are stacked one upon another on the left half of the turntable 70, the turntable 70 is rotated. The finished articles C thus moved to the right half of the turntable 70 are removed by a worker or another robot. Further, the robot 60 attracts to its attractor 60a the individual blank components B on the right half of the turntable 66 and successively transfers the blank components B onto the first table 50. Then, at the first table 50, the individual blank components B are positioned and fixed in the respective predetermined positions.

On the other hand, at the welding station 42, the blank components B on the second table 52 are welded together by the welding device 54.

When the positioning and fixing operation at the positioning station 44 and the welding operation at the welding station 42 are completed, the first table 50 is moved along the lower rails 46 to the welding station 42 while the second table 52 is moved along the upper rails 48 to the positioning station 44.

At the positioning station 44, the robot 62 attracts to its attractor 62a the finished article C on the second table 52 and transfers the attracted finished article C onto the left half of the turntable 70. Further, the robot 60 attracts to its attractor 60a the individual blank components B on the right half of the turntable 66 and successively transfers the blank components B onto the second table 52. At the second table 52, the blank components B thus transferred are positioned and fixed in the respective predetermined positions.

At the welding station 42, on the other hand, the blank components B on the first table 50 are welded together by the welding device 54.

The first and second tables 50 and 52, the robots 60 and 62 and the turntables 66 and 70 repeatedly perform the aforementioned sequence of operations.

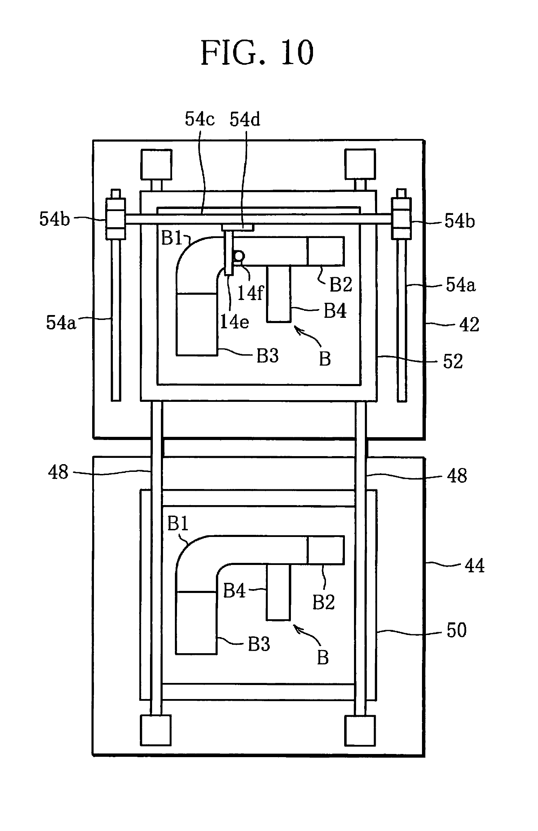

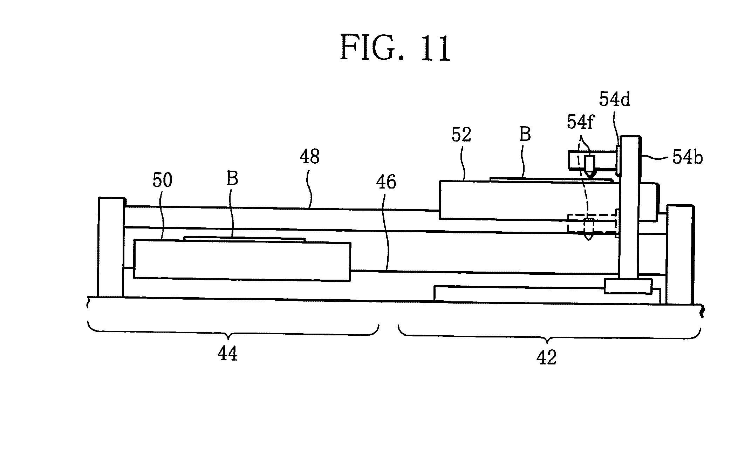

The welding device 54 arranged at the welding station 42 will be now described with reference to FIGS. 10 and 11.

The welding device 54 includes two rails 54a laid on the upper surface of the welding station 42 near the respective opposite side edges and extending parallel with the rails 48, two posts 54b guided by the respective rails 54a, a rail 54c extending perpendicularly to the rails 54a to connect the two posts 54b to each other and vertically movable along the posts 54b, a slider 54d guided by the rail 54c, and a welding head 54f supported on the slider 54d by a supporting member 54e. The positioning of the posts 54b relative to the rails 54a, the positioning of the rail 54c relative to the posts 54b and the positioning of the slider 54d relative to the rail 54c are controlled by a controller, not shown, in accordance with the welding position.

Specifically, one set of blank components B is constituted by four blank components B1, B2, B3 and B4, and butt welding is performed on each of butted junctions of the four blank components. The controller enables the welding head 54f to move along each butted junction requiring butt welding. Especially in the second embodiment, the first and second table 50 and 52 are located at respective different levels, namely, at different heights, but since the welding head 54f is vertically movable at the welding station 42, it is possible to carry out the required welding operation.

Each of the first and second tables 50 and 52 is provided with devices for positioning and fixing the individual blank components B. The positioning device and the fixing device are identical in construction and operation with the counterparts arranged in each of the first and second tables 10 and 12 of the first embodiment.

As is clear from the foregoing, in the welding equipment of the second embodiment, the first and second tables 50 and 52, on which the blank components B are fixed, are moved alternately between the positioning station 44 and the welding station 42. When the blank components B fixed on one of the tables 50 and 52 located at the welding station 42 are welded together, blank components B are positioned and fixed on the other of the tables 50 and 52 located at the positioning station 44. Thus, since the welding and positioning of the blank components B can be carried out at the same time, the overall operation time can be shortened as in the first embodiment. Moreover, the single welding station 42 suffices insofar as the same welding operation is performed on the same type of blank components B. Compared with the conventional apparatus, therefore, the welding equipment of this embodiment is advantageous in that the space required can be significantly saved. Furthermore, since the first and second tables 50 and 52 are moved at respective different levels, namely, at different heights, the single positioning station 44 suffices. Accordingly, the welding equipment as a whole can be made compact in horizontal size, compared with the welding equipment of the first embodiment.

Also, in the welding equipment of the second embodiment, when one of the first and second tables 50 and 52 is located at the welding station 42, the blank components B on the table located at the welding station 42 are welded together. While the welding operation is being performed, the other of the first and second tables 50 and 52 is located at the positioning station 44. The robot 62 transfers the finished article C on the table 50 or 52 located at the positioning station 44 onto the turntable 70 of the unloading station 58, and the robot 60 successively transfers the individual blank components B on the turntable 66 of the loading station 56 onto the table 50 or 52 located at the positioning station 44. It is therefore possible to shorten the overall operation time including the time required to load the blank components B as well as the time required to unload the finished articles C, as in the first embodiment. Also, compared with the first embodiment equipped with two positioning stages, the welding equipment of this embodiment has only one positioning stage, and since the number of robots for transferring the blank components B or the finished articles can be reduced, only a small area is required for the operation of the robots.

Regarding the positioning and fixing of the blank components B with respect to the tables 50 and 52, the welding equipment of the second embodiment provides the same advantages as those achieved by the welding equipment of the first embodiment.

While the first and second embodiments of the present invention have been described above, it is to be noted that the present invention is not limited to the foregoing embodiments alone.

For example, in the above embodiments, the welding device 14 or 54 is configured such that the welding head 14f or 54f is moved along the rails 14a or 54a extending parallel with the rails 8 or 48. Alternatively, the tables 10 and 12 or 50 and 52 on which the blank components B to be welded are placed may be moved along the rails 8 or 48 at the welding station 2 or 42. Also, each of the tables 10 and 12 may be provided with block members, instead of the guide members 36, which block members are configured to press down the butted junction of the blank components B from above, for example.

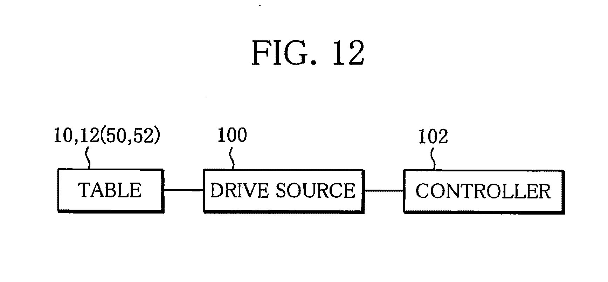

FIG. 12 is a block diagram illustrating movement control for each of the first and second tables. As illustrated in the figure, the table 10, 12 (50, 52) is connected to a drive source 100. The table 10, 12 (50, 52) is driven by the drive source 100, whereupon the table 10, 12 (50, 52) slides along the rails 8 (46, 48). The table movement timing and velocity are controlled by a controller 102 connected to the drive source 100. The tables 10 and 12 (50 and 52) may be slid by hand as the case may be.

### Explanation of Reference Signs

- 2: welding station
- 4: first positioning stage
- 6: second positioning stage
- 8: first table
- 10: second table
- 14: welding device
- 16: loading station
- 18: unloading station
- 42: welding station
- 44: positioning station
- 50: first table
- 52: second table
- 54: welding device
- 56: loading station
- 58: unloading station

## Claims

1. Welding equipment for performing butt welding on a plurality of blank components butted against each other, comprising:
a positioning station for positioning the blank components;
a welding station having a welding head for welding the blank components to each other;
first and second tables each movable between the positioning station and the welding station; and
a fixing device associated with each of the first and second tables, for fixing the blank components in respective predetermined positions on a corresponding one of the first and second tables,
wherein, when the first table is moved to the positioning station, the second table is moved to the welding station, and when the first table is moved to the welding station, the second table is moved to the positioning station, and
wherein the blank components are fixed on the first or second table located at the positioning station, then moved together with the first or second table to the welding station, and welded together by the welding head, thus obtaining a finished article.

2. The welding equipment according to claim 1, further comprising:
a loading station on which are placed the blank components not welded yet;
an unloading station on which the finished article is placed;
a first transfer device for transferring the blank components placed on the loading station onto the first or second table located at the positioning station; and
a second transfer device for transferring the finished article on the first or second table which has been moved to the positioning station after completion of welding at the welding station, to the unloading station.

3. The welding equipment according to claim 1,
wherein:
the positioning station includes a first positioning stage arranged on one side of the welding station, and a second positioning stage arranged on another side of the welding station opposite the first positioning stage,
when the first table is moved to the first positioning stage, the second table is moved to the welding station, and when the first table is moved to the welding station, the second table is moved to the second positioning stage.

4. The welding equipment according to claim 1,
wherein:
the positioning station is arranged on one side of the welding station, and
the first and second tables are moved along respective movement paths different in height from each other.

5. The welding equipment according to claim 1,
wherein each of the first and second tables is provided with a positioning device for positioning the individual blank components.

6. The welding equipment according to claim 5,
wherein the positioning device includes stoppers located in respective predetermined positions on a corresponding one of the first and second tables and capable of projecting from the corresponding table, and push members for pushing the respective blank components so as to come into close contact with corresponding ones of the stoppers.

7. The welding equipment according to claim 5,
wherein:
the blank components include at least first and second blank components, and
the first blank component is positioned in a predetermined position by the positioning device, then the first blank component is fixed on one of the first and second tables by the fixing device, and with the second blank component pushed so as to be butted against the first blank component, the second blank component is fixed on the other of the first and second tables by the fixing device.

8. The welding equipment according to claim 7,
wherein:
said one of the first and second tables further includes a pair of guide members, and
when the first blank component is fixed on said one of the first and second tables by the fixing device, the guide members are located on both sides of the first blank component near a side of the first blank component against which the second blank component is to be butted, to prevent the second blank component from running onto the first blank component.

9. The welding equipment according to claim 1,
wherein the fixing device includes attraction units for attracting respective lower surfaces of the blank components.

10. The welding equipment according to claim 9,
wherein each of the attraction units is a magnetic attraction unit attached to a corresponding one of the first and second tables.
